(19)

Europäisches Patentamt
European Patent Office
Office européen des brevets

(11) **EP 3 392 110 A1**

(12) **EUROPEAN PATENT APPLICATION**
published in accordance with Art. 153(4) EPC

(43) Date of publication:
**24.10.2018 Bulletin 2018/43**

(21) Application number: **17775484.3**

(22) Date of filing: **30.03.2017**

(51) Int Cl.:
**B60W 30/14** (2006.01)     **B60T 7/12** (2006.01)
**B60W 10/00** (2006.01)     **B60W 10/02** (2006.01)
**B60W 10/06** (2006.01)     **B60W 10/18** (2012.01)
**B60W 10/188** (2012.01)     **E02F 9/22** (2006.01)
**F02D 29/00** (2006.01)     **F02D 29/02** (2006.01)
**F16D 48/02** (2006.01)     **F16H 59/46** (2006.01)
**F16H 61/12** (2010.01)     **F16H 61/14** (2006.01)
**F16H 61/686** (2006.01)     **F16H 63/46** (2006.01)
**F16H 63/50** (2006.01)

(86) International application number:
**PCT/JP2017/013428**

(87) International publication number:
**WO 2017/170950 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.03.2016   JP 2016070761**

(71) Applicant: **Komatsu Ltd.**
**Minato-ku**
**Tokyo 107-8414 (JP)**

(72) Inventors:
• **NISHIMURA, Takuma**
  **Tokyo 107-8414 (JP)**
• **TSUDA, Manabu**
  **Tokyo 107-8414 (JP)**
• **YAMAGUCHI, Eiji**
  **Tokyo 107-8414 (JP)**
• **ENOMOTO, Ryota**
  **Tokyo 107-8414 (JP)**

(74) Representative: **Flügel Preissner Schober Seidel**
**Patentanwälte PartG mbB**
**Nymphenburger Strasse 20**
**80335 München (DE)**

(54)   **WORK VEHICLE**

(57)     This wheel loader is equipped with: an accelerator pedal (31) for setting a desired target speed; a vehicle speed sensor (47) which detects the travel speed of the vehicle body; a work implement (1a) which is driven by the output of the engine (2); service brakes (40) which brake wheels (7); a modulating clutch (41) for switching between transmission and interruption of power from the engine (2) to the wheels (7); and a controller (30) which reduces the difference between the travel speed and the target speed by controlling the engagement pressure of the modulating clutch (41) and the engagement pressure of the service brakes (40).

FIG. 2

**Description**

Technical Field

The present invention relates to a work vehicle.

Background Art

Conventionally, a series of tasks including excavating, reversing, truck approach, unloading, and reversing are performed repeatedly in a work vehicle provided with a work implement such as a wheel loader. Among these tasks, the truck approach includes an operation for moving forward at a very small speed toward a dump truck while raising the work implement loaded with earth.

Patent Document No. 1 proposes a method for matching a travel speed with a desired target speed by controlling the engagement pressure of a travel system clutch in accordance with the travel speed of the work vehicle so that the truck approach can be performed at a constant travel speed.

Citation List

Patent Literature

[Patent Literature 1] Japanese Patent Laid-open No. H11-181841

Summary of Invention

Technical Problem

However, when the truck approach is performed on a slope according to the method of Patent Document No. 1, the travel speed of the work vehicle often becomes slower or faster than the target speed and thus it is difficult to make the work vehicle travel at a constant speed by only controlling the engagement pressure of the travel system clutch.

In addition to during a truck approach, there may be a desire to make the work vehicle travel at a constant speed regardless of the whether or not work is being carried out such as when descending a slope.

An object of the present invention is to provide a work vehicle in which the difference between a travel speed and a target speed can be reduced in consideration of the above problem.

Solution to Problem

A work vehicle according to the present invention is provided with a target speed setting unit, a travel speed detecting unit, an engine, a work implement, a travel device, a brake, a clutch, and a controller. The target speed setting unit is configured to set a desired target speed. The travel speed detecting unit configured to detect the travel speed of a vehicle body. The work implement is attached to the vehicle body and is driven by the output of the engine. The brake is disposed between the travel device and the engine and configured to brake the travel device. The clutch is disposed between the engine and the brake and configured to transmit or interrupt power from the engine to the travel device. The controller is configured to reduce a difference between the travel speed and the target speed by controlling an engagement pressure of the clutch and an engagement pressure of the brake.

Advantageous Effects of Invention

According to the present invention, a work vehicle that is capable of reducing the difference between the travel speed and the target speed can be provided.

Brief Description of Drawings

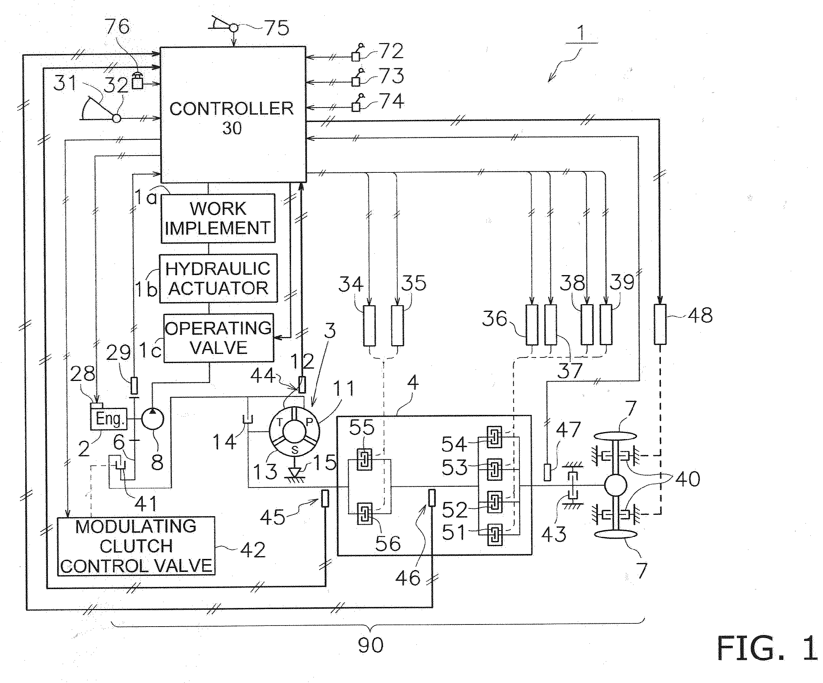

FIG. 1 is a block diagram illustrating a configuration of a powertrain of a wheel loader.

FIG. is a flow chart for explaining a constant travel speed control performed by the controller.

Description of Embodiments

(Configuration of powertrain 1 of wheel loader)

FIG. 1 is a block diagram illustrating a configuration of a powertrain 1 of a wheel loader.

A transfer 6, a modulating clutch 41, a torque converter 3, a transmission 4, a parking brake 43, and service brakes 40 (example of a brake) are provided in a driving power transmission path 90 from an engine 2 to wheels 7 (example of travel device).

An output shaft of the engine 2 is coupled to the transfer 6. The transfer 6 is coupled to the modulating clutch 41 and a hydraulic pump 8.

An engine rotation speed sensor 29 for detecting a rotation speed Ne of the output shaft is provided on the output shaft of the engine 2. The engine rotation speed sensor 29 transmits a detection signal which indicates the rotation speed Ne to the controller 30.

A portion of the output of the engine 2 is transmitted via the transfer 6, the modulating clutch 41, the torque converter 3, and the transmission 4 to the wheels 7. As a result, the wheel loader is able to travel. A travel speed Vt of the wheel loader can be controlled by means of an accelerator pedal 31 provided in an operating cabin during normal travel control time excluding a constant speed travel control time which is discussed below. When the accelerator pedal 31 is subjected to a pressing operation by an operator, an accelerator opening degree sensor 32 transmits a detection signal which indicates the pressing operation amount of the accelerator pedal 31.

The remainder of the output of the engine 2 is transmitted to the hydraulic pump 8 via the transfer 6. As a result, the hydraulic pump 8 is driven. The hydraulic pump 8 supplies a hydraulic fluid via an operating valve 1c to a hydraulic actuator 1b for driving a work implement 1a. The work implement 1a is attached to the vehicle body of the wheel loader. The work implement 1a has, for example, a boom and a bucket. The raising and lowering actions of the work implement 1a can be normally controlled by the operation of a work implement lever 72 provided in the operating cabin.

In this way, the wheel loader is able to use the output of the engine 2 to repeatedly perform a series of tasks including excavating, reversing, truck approach, unloading, and reversing. Among these tasks, the truck approach includes an operation for moving forward at a very small speed toward a dump truck (not illustrated) while raising the work implement 1a loaded with earth.

The modulating clutch 41 is provided between the engine 2 and the torque converter 3. The power transmitted from the engine 2 to the torque converter 3 can be changed by varying the engagement pressures on the input side and the output side of the modulating clutch 41. The modulating clutch 41 is configured by a wet multiple disk hydraulic clutch.

The engagement pressures on the input side and the output side of the modulating clutch 41 can be controlled by means of hydraulic pressure of the hydraulic fluid supplied from a modulating clutch control valve 42 to the modulating clutch 41. In the present embodiment, the modulating clutch 41 transitions from interruption (open state) through half-engagement (state of transmitting power while slip is generated) to full engagement (state of transmitting full power) as the hydraulic pressure of the supplied hydraulic fluid increases. The engagement pressure of the modulating clutch 41 is controlled by adjusting the clutch hydraulic pressure that the modulating clutch control valve 42 supplies to the modulating clutch 41 in response to a clutch hydraulic pressure command signal transmitted from the controller 30 to the modulating clutch control valve 42.

The torque converter 3 is provided between the modulating clutch 41 and the transmission 4. The torque converter 3 has a pump impeller 11, a turbine runner 12, a stator 13, a lock-up clutch 14, and a one-way clutch 15. The pump impeller 11 is coupled to the engine 2. The turbine runner 12 is coupled to the transmission 4. The stator 13 is a reaction element provided between the pump impeller 11 and the turbine runner 12. The lock-up clutch 14 is able to disconnect or connect the transmission of the power between the pump impeller 11 and the engine 2 due to the engagement / release of the pump impeller 11 and the turbine runner 12. The lock-up clutch 14 operates by hydraulic pressure. The one-way clutch 15 allows the rotation of the stator 13 only in one direction.

A torque converter input rotation speed sensor 44 for detecting a rotation speed Nc of the pump impeller 11 is provided on the pump impeller 11 of the torque converter 3. The torque converter input rotation speed sensor 44 transmits a detection signal which indicates the rotation speed Nc to the controller 30.

The transmission 4 has a forward travel clutch 55 corresponding to a forward travel stage, and a reverse travel clutch 56 corresponding to a reverse travel stage. The transmission 4 has a first speed clutch 51, a second speed clutch 52, a third speed clutch 53, and a fourth speed clutch 54 that correspond respectively to first to fourth speed stages. The forward travel clutch 55 and the reverse travel clutch 56 are direction selector clutches and the first to fourth speed clutches 51 to 54 are speed selector clutches. The clutches 51 to 56 are configured by wet multiple disk hydraulic clutches. The transmission 4 selectively engages or releases the clutches 51 to 56 in accordance with the traveling direction of the wheel loader, the required driving power, and the required travel speed Vt.

The engagement pressures of the input side and the output side of the clutches 51 to 56 of the transmission 4 can be controlled by the hydraulic pressure of the hydraulic fluid supplied to the clutches 51 to 56. In the present embodiment, the clutches 51 to 56 transition from open through half-engagement to full engagement as the hydraulic pressure of the supplied hydraulic fluid increases. The engagement pressures of the clutches 51 to 56 are controlled by the adjustment of the clutch hydraulic pressure supplied to the clutches 51 to 56 by clutch control valves 34 to 39 in response to clutch hydraulic pressure command signals transmitted from the controller 30 to the clutch control valves 34 to 39.

A transmission input shaft rotation speed sensor 45 for detecting a rotation speed Nt0 of the input shaft is provided on the input shaft of the transmission 4. The transmission input shaft rotation speed sensor 45 transmits detection signals which indicate the rotation speed Nt0 to the controller 30.

A transmission middle shaft rotation speed sensor 46 for detecting a rotation speed Nt1 of the middle shaft is provided on the middle shaft of the transmission 4. The transmission middle shaft rotation speed sensor 46 transmits detection signals which indicate the rotation speed Nt1 to the controller 30.

A vehicle speed sensor 47 for detecting a rotation speed Nt2 of the output shaft is provided on the output shaft of the transmission 4. The vehicle speed sensor 47 transmits a detection signal which indicates the rotation speed Nt2 to the controller 30. The vehicle speed sensor 47 is an example of a travel speed detecting unit.

The parking brake 43 is disposed between the transmission 4 and the service brakes 40. The parking brake 43 is attached to the output shaft. The parking brake 43 is mainly a negative brake for parking the wheel loader. The parking brake 43 is a wet multiple disk type brake that can be switched between a braking state and a non-braking state. The engagement pressure of the parking brake 43 can be adjusted by means of the operation amount of a parking brake lever disposed at the operator's seat.

The services brake 40 are disposed between the parking brake 43 and the wheels 7. The service brakes 40 are attached to an axle coupled to the wheels 7. The service brakes 40 are mainly brakes used for decelerating and stopping the work vehicle during traveling. The service brakes 40 are wet multiple disk type brakes and so-called positive brakes that can be switched between a braking state and a non-braking state. The engagement pressure (that is, the braking force) of the service brakes 40 is controlled by the adjustment by a brake control valve 48 of brake hydraulic pressure supplied to the service brakes 40 in response to brake hydraulic pressure command signals transmitted by the controller 30 to the brake control valve 48.

The controller 30 determines a pressing operation amount of the accelerator pedal 31 by the operator on the basis of the detection signals transmitted from the accelerator opening degree sensor 32, and transmits fuel injection amount command signals to an electronically-controlled fuel injection device 28. The electronically-controlled fuel injection device 28 evaluates the injection amount command signals, adjusts the fuel injection amount to be injected into the cylinders, and controls the output (rotation speed) of the engine 2. During normal travel control, the controller 30 transmits the clutch hydraulic pressure command signals to the modulating clutch control valve 42 so that the modulating clutch 41 enters full engagement.

The controller 30 transmits work implement hydraulic pressure command signals to the operating valve 1c in response to the operation of the work implement lever 72 by the operator. The operating valve 1c evaluates the work implement hydraulic pressure command signals and controls the supply amount of the hydraulic fluid from the hydraulic pump 8 to the hydraulic actuator 1b. The action speed of the work implement 1a is maintained by adjusting the operation amount of the work implement lever 72.

The controller 30 transmits the clutch hydraulic pressure command signals to the forward and reverse travel clutch control valves 34 and 35 in accordance with the operating position of a forward/reverse travel switching lever 73. The forward and reverse travel clutch control valves 34 and 35 evaluate the clutch hydraulic pressure command signals and cause one of the forward travel clutch 55 and the reverse travel clutch 56 to become engaged. The controller 30 transmits the clutch hydraulic pressure command signals to the speed change clutch control valves 36 to 39 in accordance with an operating position of a speed change lever 74. The speed change clutch control valves 36 to 39 evaluate the clutch hydraulic pressure command signals and cause any of the speed change clutches 51 to 54 of the transmission 4 to become engaged. The controller 30 transmits brake hydraulic pressure command signals to the brake control valve 48 in accordance with a pressing operation amount of a brake pedal 75. The brake control valve 48 evaluates the brake hydraulic pressure command signals and controls the engagement pressure of the service brakes 40 by adjusting the brake hydraulic pressure supplied to the service brakes 40.

In this way, the controller 30 executes normal travel control in accordance with the operations of the operator when a constant speed travel execution switch 76 is not in an operating state. Conversely, the controller 30 switches from the normal travel control to a constant speed travel control when the constant speed travel execution switch 76 is switched to the operating state by the operator. The controller 30 automatically controls the engagement pressure of the modulating clutch 41 and the engagement pressure of the service brakes 40 so as to maintain a desired target speed Vo during the constant speed travel control.

(Constant speed travel control by controller 30)

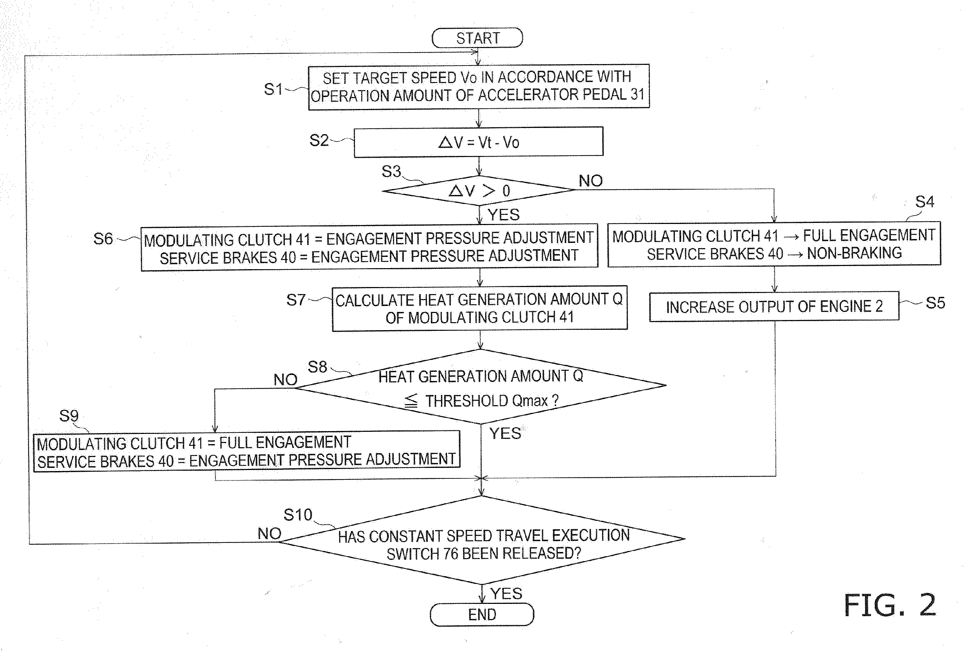

The constant speed travel control performed by the controller 30 will be discussed next with reference to FIG. 2. FIG. is a flow chart for explaining the constant travel speed control performed by the controller.

The processing in step S1 is started when the constant speed travel execution switch 76 enters an action state. The operator sets the constant speed travel execution switch 76 to the action state when the operator wants to perform a truck approach on a slope (including uphill and downhill slopes) or when the operator wants to move down a downward slope at a low speed.

In step S1, the controller 30 sets the target speed Vo of the wheel loader in accordance with the pressing operation amount of the accelerator pedal 31 transmitted by the accelerator opening degree sensor 32. The correspondence relation between the pressing operation amount and the target speed Vo can be set as desired, and can be set as indicated in the following table, for example. In the present embodiment, the accelerator pedal 31 is an example of a target speed setting unit.

(Table 1)

| Pressing operation amount of accelerator pedal 31 | target speed Vo (km/h) |
|---|---|
| less than 25% | 1 |
| 25% to less than 50% | 2 |
| 50% to less than 75% | 3 |
| 75% or higher | 4 |

In step S2, the controller 30 converts the rotation speed Nt2 of the output shaft detected by the vehicle speed sensor 47 to the travel speed Vt of the vehicle body of the wheel loader. The controller 30 then calculates a differential $\Delta V$ obtained by subtracting the target speed Vo from the travel speed Vt.

In step S3, the controller 30 determines whether the differential $\Delta V$ is greater than zero. If the differential $\Delta V$ is zero or less, the processing moves from step S4 to step S5. If the differential $\Delta V$ is greater than zero, the processing moves to step S6.

In step S4, because the travel speed Vt has not reached the target speed Vo, the controller 30 transmits a clutch hydraulic pressure command signal for initiating full engagement of the modulating clutch 41 to the modulating clutch control valve 42, and transmits a brake hydraulic pressure command signal for initiating non-braking of the service brakes 40 to the brake control valve 48. Next in step S5, the controller 30 transmits a fuel injection amount command signal for increasing the output (rotation speed) of the engine 2 to the electronically-controlled fuel injection device 28 in order to raise the travel speed Vt. As a result, the modulating clutch 41 is fully engaged and the output (rotation speed) of the engine 2 rises such that the differential between the travel speed Vt and the target speed Vo is reduced and the travel speed Vt approaches the target speed Vo. The processing then advances to step S10.

Because the travel speed Vt is greater than the target speed Vo, the controller 30 in step S6 transmits a clutch hydraulic pressure command signal for adjusting the engagement pressure of the modulating clutch 41 to the modulating clutch control valve 42, and transmits a brake hydraulic pressure command signal for adjusting the engagement pressure of the service brakes 40 to the brake control valve 48. The controller 30 adjusts the engagement pressure of the modulating clutch 41 and the engagement pressure of the service brakes 40 in accordance with the value of the differential $\Delta V$. Specifically, because there is a need to reduce the travel speed Vt in correspondence to an increase in the differential $\Delta V$, the controller 30 reduces the engagement pressure of the modulating clutch 41 and increases the engagement pressure of the service brakes 40 in correspondence to an increase in the differential $\Delta V$. As a result, the differential between the travel speed Vt and the target speed Vo decreases and the travel speed Vt approaches the target speed Vo.

In step S7, the controller 30 monitors the usage state of the modulating clutch 41. Specifically, the controller 30 calculates a heat generation amount Q of the modulating clutch 41. The heat generation amount Q of the modulating clutch 41 can be calculated on the basis of the following equations (1) and (2).

$$\text{Heat generation amount } Q = \text{clutch heat generation rate } q$$

$$\times \text{ clutch slip time t} \qquad ...(1)$$

$$\text{Clutch heat generation rate } q = \text{coefficient of friction} \times \text{relative rotation speed}$$

$$\times \text{clutch hydraulic pressure} \quad ...(2)$$

In equation (1), the clutch slip time t is the time that the engagement pressure adjustment state of the modulating clutch 41 continues. When the modulating clutch 41 is in full engagement or is disconnected, the clutch slip time t returns to zero.

In equation (2), the coefficient of friction is the coefficient of friction of the friction material of the clutch plates. The relative rotation speed is the differential between the engine rotation speed Ne detected by an engine rotation speed sensor and the pump impeller rotation speed Nc detected by the torque converter input rotation speed sensor. In addition, the relative rotation speed is the rotation speed difference between the input side and the output side. The clutch hydraulic pressure is the surface pressure generated between the clutch plates. Because a proportional electromagnetic valve is used in the modulating clutch control valve 42, the clutch hydraulic pressure can be read from the clutch hydraulic pressure command signals transmitted from the controller 30 to the modulating clutch control valve 42.

In step S8, the controller 30 determines whether the heat generation amount Q is equal to or less than a threshold Qmax. When the heat generation amount Q is greater than Qmax, the processing moves to step S9. When the heat generation amount Q is equal to or less than Qmax, the processing moves to step S10.

In step S9, the controller 30 increases the engagement pressure of the service brakes 40 after the modulating clutch 41 has become fully engaged. As a result, the travel speed Vt is able to approach the target speed Vo while the heat generation amount Q of the modulating clutch 41 is decreasing. At this time, the controller 30 preferably reduces the output of the engine 2. As a result, the engagement pressure of the service brakes 40 can be prevented from becoming excessively large.

In step S10, the controller 30 determines whether the constant speed travel execution switch 76 is released. If the constant speed travel execution switch 76 is still in the action state, the processing returns to step S1. If the constant speed travel execution switch 76 has been released, the processing is finished.

(Characteristics)

(1) The controller 30 in the wheel loader reduces the difference between the travel speed Vt and the target speed Vo by controlling the engagement pressure of the service brakes 40 while controlling the engagement pressure of the modulating clutch 41 (see step S6 in FIG. 2). Therefore, a case of the travel speed Vt becoming slower than the target speed Vo can be effectively suppressed even when, for example, the truck approach is being performed on a downward slope.

(2) The controller 30 reduces the difference between the travel speed Vt and the target speed Vo by controlling the output of the engine 2 in addition to the engagement pressure of the modulating clutch 41 and the engagement pressure of the service brakes 40 (see step S5 in FIG. 2). Therefore, the difference between the travel speed Vt and the target speed Vo can be reduced more quickly in comparison to a case of controlling only the engagement pressure of the modulating clutch 41 and the engagement pressure of the service brakes 40.

(3) The controller 30 reduces the difference between the travel speed Vt and the target speed Vo by controlling the engagement pressure of the service brakes 40 after the modulating clutch 41 has become fully engaged when the heat generation amount Q of the modulating clutch 41 is greater than the threshold Qmax (example of a predetermined threshold). Therefore, the travel speed Vt can approach the target speed Vo while reducing the heat generation amount Q of the modulating clutch 41 when the heat generation amount Q of the modulating clutch 41 becomes excessive.

(Modified examples)

The present invention is not limited to the above embodiment and various changes and modifications may be made without departing from the spirit of the invention.

While the accelerator pedal 31 is described in the above embodiment as the target speed setting unit for setting the target speed Vo, the invention is not limited in this way. For example, a dial-type knob provided in the vicinity of the operator's seat may be used as the target speed setting unit. The target speed Vo can be set in the same way as indicated in the above table by turning the dial-type knob.

While the service brakes 40 are used as brakes for limiting the travel speed Vt during the constant speed travel control in the above embodiment, the parking brake 43 may be used in place of the service brakes 40, or the service brakes 40 and the parking brake 43 may be used together. In this case, the parking brake 43 may also be a hydraulic pressure controlled type in the same way as the service brakes 40.

While the service brakes 40 and the parking brake 43 are wet multiple disk type brakes in the above embodiment, well-known disk brakes or drum brakes may also be used.

While the modulating clutch 41 is used as a clutch for adjusting the travel speed Vt during the constant speed travel control in the above embodiment, the invention is not limited in this way. Any of the clutches 51 to 56 of the transmission 4 can be used as the clutch for adjusting the travel speed Vt during the constant speed travel control. In this case, there is no need to provide the modulating clutch 41. In addition, an impeller clutch 14 that is built into the torque converter 3 and that is capable of disconnecting or connecting the power transmission between the pump impeller 11 and the engine 2 may be used as a clutch for adjusting the travel speed Vt during the constant speed travel control. Furthermore, two or more of the aforementioned clutches may be used in combination as clutches for adjusting the travel speed Vt during the constant speed travel control.

While the clutch hydraulic pressure command signal transmitted from the controller 30 to the modulating clutch control valve 42 is used as a value of the clutch hydraulic pressure for calculating the clutch heat generation rate q in the above embodiment, the invention is not limited in this way. A direct hydraulic pressure sensor may be installed in a clutch circuit and the measurement value of the hydraulic pressure sensor may be used as-is.

Reference Signs List

|     |                                     |
| --- | ----------------------------------- |
| 1:  | Powertrain                          |
| 2:  | Engine                              |
| 3:  | Torque converter                    |
| 4:  | Transmission                        |
| 7:  | Wheels                              |
| 30: | Controller                          |
| 31: | Accelerator pedal                   |
| 40: | Service brakes                      |
| 41: | Modulating clutch                   |
| 47: | Vehicle speed sensor                |
| 72: | Work implement lever                |
| 76: | Constant speed travel execution switch |
| Vt: | Travel speed                        |
| Vo: | Target speed                        |

**Claims**

1. A work vehicle comprising:

   a target speed setting unit configured to set a desired target speed;
   a travel speed detecting unit configured to detect a travel speed of a vehicle body;
   an engine;
   a work implement attached to the vehicle body and driven by an output of the engine;
   a travel device;
   a brake disposed between the travel device and the engine and configured to brake the travel device;
   a clutch disposed between the engine and the brake and configured to transmit or interrupt power from the engine to the travel device; and
   a controller configured to reduce a difference between the travel speed and the target speed by controlling an engagement pressure of the clutch and an engagement pressure of the brake.

2. The work vehicle according to claim 1, wherein
   the controller is configured to reduce the difference between the travel speed and the target speed by controlling the engagement pressure of the clutch, the engagement pressure of the brake, and the output of the engine.

3. The work vehicle according to claim 1 or 2, wherein
   the controller is configured to calculate a heat generation amount of the clutch, and

the controller is configured to change the engagement pressure of the clutch and the engagement pressure of the brake in accordance with the heat generation amount.

4. The work vehicle according to any one of claims 1 to 3, wherein
the target speed setting unit is an accelerator pedal operation amount.

5. The work vehicle according to claim 4, further comprising:

a constant travel speed execution setting unit configured to set whether or not to execute a control for reducing the difference between the travel speed and the target speed, wherein
the controller
sets the target speed in accordance with the accelerator pedal operation amount during a constant travel speed execution mode; and
sets the output of the engine in accordance with the accelerator pedal operation amount when the constant travel speed execution mode is not activated.

6. The work vehicle according to any one of claims 1 to 5, further comprising:

a transmission disposed between the engine and the brake and having at least one direction selector clutch, wherein
the clutch is the direction selector clutch.

7. The work vehicle according to any one of claims 1 to 5, further comprising:

a transmission disposed between the engine and the brake and having at least one speed selector clutch, wherein the clutch is the speed selector clutch.

8. The work vehicle according to any one of claims 1 to 5, further comprising:

a transmission disposed between the engine and the brake, wherein
the clutch is a modulating clutch disposed between the engine and the transmission.

9. The work vehicle according to any one of claims 1 to 5, further comprising:

a transmission disposed between the engine and the brake; and
a torque converter disposed between the engine and the transmission, wherein the clutch is an impeller clutch built into the torque converter.

10. The work vehicle according to any one of claims 1 to 9, wherein
the controller reduces the difference between the travel speed and the target speed by initiating full engagement of the clutch and controlling the engagement pressure of the brake when the heat generation amount is greater than a predetermined threshold.

FIG. 1

EP 3 392 110 A1

EP 3 392 110 A1

START

S1 — SET TARGET SPEED Vo IN ACCORDANCE WITH OPERATION AMOUNT OF ACCELERATOR PEDAL 31

S2 — $\triangle V = Vt - Vo$

S3 — $\triangle V > 0$ — NO

YES

S6 — MODULATING CLUTCH 41 = ENGAGEMENT PRESSURE ADJUSTMENT
SERVICE BRAKES 40 = ENGAGEMENT PRESSURE ADJUSTMENT

S4 — MODULATING CLUTCH 41 → FULL ENGAGEMENT
SERVICE BRAKES 40 → NON-BRAKING

S7 — CALCULATE HEAT GENERATION AMOUNT Q OF MODULATING CLUTCH 41

S5 — INCREASE OUTPUT OF ENGINE 2

S8 — HEAT GENERATION AMOUNT Q $\leqq$ THRESHOLD Qmax ?

NO

YES

S9 — MODULATING CLUTCH 41 = FULL ENGAGEMENT
SERVICE BRAKES 40 = ENGAGEMENT PRESSURE ADJUSTMENT

S10 — HAS CONSTANT SPEED TRAVEL EXECUTION SWITCH 76 BEEN RELEASED?

NO

YES

END

FIG. 2

**INTERNATIONAL SEARCH REPORT**

| International application No. |
| --- |
| PCT/JP2017/013428 |

| A. | CLASSIFICATION OF SUBJECT MATTER |
| --- | --- |

See extra sheet.

According to International Patent Classification (IPC) or to both national classification and IPC

| B. | FIELDS SEARCHED |
| --- | --- |

Minimum documentation searched (classification system followed by classification symbols)
B60W30/14, B60T7/12, B60W10/00, B60W10/02, B60W10/06, B60W10/18, B60W10/188, E02F9/22, F02D29/00, F02D29/02, F16D48/02, F16H59/46, F16H61/12, F16H61/14, F16H61/686, F16H63/46, F16H63/50

Documentation searched other than minimum documentation to the extent that such documents are included in the fields searched
Jitsuyo Shinan Koho     1922–1996    Jitsuyo Shinan Toroku Koho    1996–2017
Kokai Jitsuyo Shinan Koho   1971–2017    Toroku Jitsuyo Shinan Koho    1994–2017

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br>Y | JP 2009-29424 A (Komatsu Ltd.),<br>12 February 2009 (12.02.2009),<br>paragraphs [0042] to [0049]; fig. 1<br>(Family: none) | 1-2,4,6<br>3-10 |
| Y | JP 2003-166634 A (Nissan Motor Co., Ltd.),<br>13 June 2003 (13.06.2003),<br>paragraphs [0042] to [0047]<br>(Family: none) | 3-10 |
| Y | JP 2012-86769 A (Nissan Motor Co., Ltd.),<br>10 May 2012 (10.05.2012),<br>paragraphs [0075] to [0076]<br>(Family: none) | 3-10 |

☒   Further documents are listed in the continuation of Box C.     ☐   See patent family annex.

| *   Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 May 2017 (29.05.17) | 06 June 2017 (06.06.17) |

| Name and mailing address of the ISA/<br>Japan Patent Office<br>3-4-3,Kasumigaseki,Chiyoda-ku,<br>Tokyo 100-8915,Japan | Authorized officer |
| --- | --- |
| | Telephone No. |

Form PCT/ISA/210 (second sheet) (January 2015)

**INTERNATIONAL SEARCH REPORT**

International application No.

PCT/JP2017/013428

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-215171 A (Denso Corp.), 30 September 2010 (30.09.2010), paragraphs [0030] to [0031] (Family: none) | 5-10 |
| Y | JP 2009-275893 A (Komatsu Ltd.), 26 November 2009 (26.11.2009), paragraphs [0016] to [0023]; fig. 1 (Family: none) | 7-10 |

Form PCT/ISA/210 (continuation of second sheet) (January 2015)

**INTERNATIONAL SEARCH REPORT**

International application No.

PCT/JP2017/013428

Continuation of A. CLASSIFICATION OF SUBJECT MATTER
  (International Patent Classification (IPC))

B60W30/14(2006.01)i, B60T7/12(2006.01)i, B60W10/00(2006.01)i,
B60W10/02(2006.01)i, B60W10/06(2006.01)i, B60W10/18(2012.01)i,
B60W10/188(2012.01)i, E02F9/22(2006.01)i, F02D29/00(2006.01)i,
F02D29/02(2006.01)i, F16D48/02(2006.01)i, F16H59/46(2006.01)i,
F16H61/12(2010.01)i, F16H61/14(2006.01)i, F16H61/686(2006.01)i,
F16H63/46(2006.01)i, F16H63/50(2006.01)i

          (According to International Patent Classification (IPC) or to both national
          classification and IPC)

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11181841 B